# EUROPÄISCHE PATENTANMELDUNG

(11) **EP 2 196 267 A2**
(43) Veröffentlichungstag der Anmeldung: **16.06.2010**
(21) Anmeldenummer: 09013726.6
(22) Anmeldetag: 31.10.2009
(51) Int. Cl.: B05B 13/04, B41J 3/00

(54) **Verfahren zum Lackieren einer dreidimensionalen Oberfläche eines Bauteils**

(30) Priorität: 09.12.2008 DE 102008061203
(71) Anmelder: REHAU AG + Co, 95111 Rehau (DE)
(72) Erfinder: Ansorge, Helmut, 91555 Feuchtwangen (DE); Krauss, Peter, 95213 Münchberg (DE)

(57) **Zusammenfassung**

Die Erfindung betrifft ein Verfahren zum Lackieren einer dreidimensionalen Oberfläche (12) eines Bauteils (14), insbesondere eines Fahrzeug-Kunststoffbauteils (14), wobei auf die Oberfläche (12) mittels wenigstens einer digital ansteuerbaren Lackiervorrichtung (16) ein Lack aufgebracht wird, wobei die Lackiervorrichtung (16) wenigstens eine von der Oberfläche (12) beabstandete Auftrageinheit (18), insbesondere einen Druckkopf (18), zum Auftragen des Lacks auf die Oberfläche (12) und wenigstens eine Dosiereinheit zu Einstellung des aus der Auftrageinheit (18) austretenden Lack-Volumenstroms aufweist, und wobei die Auftrageinheit (18) während des Lackierens über die Oberfläche (12) bewegt wird, und dabei zumindest zeitweise einer dreidimensionalen Trajektorie folgt. Die Erfindung betrifft ferner ein System (10) zur Durchführung des Verfahrens.

## Beschreibung

Die vorliegende Erfindung betrifft ein Verfahren zum Lackieren einer dreidimensionalen Oberfläche eines Bauteils, insbesondere eines Fahrzeug-Kunststoffbauteils.

Die Lackierung der dreidimensionalen Oberflächen von Bauteilen, insbesondere Fahrzeug-Kunststoffbauteilen (wie beispielsweise Stoßfängern), erfolgt in der Regel mittels Automatiklackierpistolen und/oder Hochrotationszerstäubern mit und ohne Elektrostatik, wobei hierbei insbesondere z.B. auch Hydro- und Lösemittellacke aufgebracht werden. Die angewandte Zerstäubertechnologie basiert im Wesentlichen auf zwei Wirkprinzipien, umfassend Luftzerstäubung und Rotationszerstäubung, wobei mittels der Luftzerstäubung bzw. der Rotationszerstäubung das aufzutragende Lackmaterial sehr fein zerstäubt wird und nicht die gesamten Tröpfchen auf das Bauteil gelangen, einhergehend mit einem entsprechenden Materialverlust, der nicht mehr verwertbar ist bzw. nur aufwendig rezyklierbar ist. So liegt der Auftragswirkungsgrad bei diesen bekannten Verfahren bei nur ca. 50 % bis 70 %.

### Zugrundeliegende Aufgabe

Der vorliegenden Erfindung liegt daher die Aufgabe zugrunde, ein Verfahren zum Lackieren einer dreidimensionalen Oberfläche eines Bauteils anzugeben, mit dem im Vergleich zu bekannten Lösungen der während des Lackiervorgangs entstehende Verlust an Lackiermaterial bzw. Lack deutlich reduziert oder nahezu vollständig vermieden werden kann.

### Erfindungsgemäße Lösung

Diese Aufgabe wird erfindungsgemäß mit einem Verfahren zum Lackieren einer dreidimensionalen Oberfläche eines Bauteils, insbesondere eines Fahrzeug-Kunststoffbauteils gelöst, wobei auf die Oberfläche mittels wenigstens einer digital ansteuerbaren Lackiervorrichtung ein Lack aufgebracht wird, wobei die Lackiervorrichtung wenigstens eine von der Oberfläche beabstandete Auftrageinheit, insbesondere einen Druckkopf, zum Auftragen des Lacks auf die Oberfläche und wenigstens eine Dosiereinheit zur Einstellung des aus der Auftrageinheit austretenden Lack-Volumenstroms aufweist, und wobei die Auftrageinheit während des Lackierens über die Oberfläche bewegt wird, und dabei zumindest zeitweise einer dreidimensionalen Trajektorie folgt.

Im Unterschied zu bekannten Lösungen erfolgt bei dem erfindungsgemäßen Verfahren während des Lackierens eine Bewegung einer Auftrageinheit einer digital ansteuerbaren Lackiervorrichtung, insbesondere eines Druckkopfs, wobei die Auftrageinheit während des Lackierens über die Oberfläche bewegt wird, und dabei zumindest zeitweise einer dreidimensionalen Trajektorie folgt. Vorzugsweise ist hierbei die Trajektorie eine Funktion der Geometrie der Oberfläche bzw. eine Funktion der Form der Oberfläche, so dass die Auftrageinheit während des Lackierens eine in Bezug zu der Oberfläche definierte Bewegung ausführt, einhergehend mit einer deutlichen Reduzierung oder nahezu vollständigen Vermeidung des Verlusts an Lack bzw. Lackiermaterial während des Lackierens. Erfindungsgemäß entfallen bzw. reduzieren sich somit insbesondere die Kosten für Lackabscheidung (Overspray), die Kosten für Lackentsorgung, die Kosten für Zuluftaufbereitung, die Kosten für Abluftaufbereitung und die Kosten für Maskierung bei partieller Lackbeschichtung.

Da mittels des erfindungsgemäßen Verfahrens nahezu kein "Overspray", also kein Lackverlust bzw. Lackmaterial-Verlust entsteht und somit also auch keine unerwünscht besprühten Bereiche entstehen, können Einzelpartien am Bauteil von der Lackbeschichtung ausgeschlossen werden, wobei hierfür die Bewegung der Auftrageinheit bzw. Auftrageinheiten so vorgenommen werden kann, dass scharfe Farbtrennungen entstehen können. Infolge des erfindungsgemäß nahezu vollständig beseitigten Lackverlusts bzw. Lackmaterialsverlust entfällt die aufwändige Abscheidung desselben aus der Kabinenluft, und ferner entfällt die Entsorgung und Rezyklierung mittels Recyclingeinrichtungen zur Wiederverwertung.

Die digital ansteuerbare Lackiervorrichtung ist vorzugsweise in Form einer digital ansteuerbaren Druckvorrichtung ausgebildet, die eingerichtet ist, gemäß einem bekannten Digitaldruckverfahren Lack aufzutragen. Unter Digitaldruckverfahren versteht man hierbei ein Druckverfahren, bei dem das Druckbild direkt von einem Computer in eine Druckmaschine übertragen wird, ohne dass eine statische Druckform benutzt wird. Ein typisches Digitaldruckverfahren ist das bekannte Tintenstrahldruckverfahren.

Der Druckkopf bzw. die Auftrageinheit ist vorzugsweise in Form eines Druckkopfs für einen Tintenstrahldrucker ausgebildet bzw. im Wesentlichen in Form eines Druckkopfs für einen Tintenstrahldrucker ausgebildet, und weist daher wenigstens eine Düse, vorzugsweise einer Mehrzahl von Düsen in Form von Röhrchen bzw. Nadeln auf, welche auf bekannte Weise zum Lackieren Lack bzw. Lackiermaterial auf die Oberfläche des Bauteils spritzen bzw. aufbringen. Ein in Form eines Druckkopfs für einen Tintenstrahldrucker ausgebildeter Druckkopf ermöglicht ein feinverteiltes Aufbringen des Lacks auf die Oberfläche des Bauteils. Diese Druckköpfe zerstäuben das Lackiermaterial bzw. den Lack nicht und haben dadurch einen wesentlich höheren Auftragswirkungsgrad (AWG), was in Verbindung mit der definierten Bewegung entlang der erfindungsgemäßen Trajektorie einhergeht mit einer sehr deutlichen Reduzierung des Verlusts an Lack bzw. Lackiermaterial während des Lackierens. Die variable Portionierung der einzelnen Tropfen kann z.B. über Heizelemente in den Druckdüsen gesteuert werden, oder über die Zeit der angelegten elektrischen Spannung an den Piezokristallen.

Die Dosiereinheit weist bevorzugt steuerbare Zahnradpumpen oder Membranpumpen auf, um den Lack-Volumenstrom einzustellen. Insbesondere kann die Dosiereinheit einen Dosierzylinder mit einem darin längsbeweglich aufgenommenen Kolben aufweisen, um den Lack-Volumenstrom, also die pro Zeiteinheit aus der Auftrageinheit austretende Lackmenge, einzustellen, wobei die Dosiereinheit mittels eines Servomotors ansteuerbar ist. Bevorzugt werden die Auftrageinheiten einzeln mit Lack versorgt, wobei die Dosierung und vorzugsweise auch der Materialvordruck dem Düsendruchmesser der Auftrageinheit bzw. Auftrageinheiten und dem Lack-Volumenstrom angepasst werden.

Bei einer praktischen Ausführungsform des erfindungsgemäßen Verfahrens wird zum Bewegen der Auftrageinheit ein Industrieroboter verwendet, wobei der Industrieroboter zum Bewegen der Auftrageinheit von einer ersten Steuereinheit angesteuert wird, auf der ein dem Bauteil zugeordnetes Roboterprogramm abläuft, und wobei die Dosiereinheit zur Einstellung eines vorgegebenen Lack-Volumenstroms von einer zweiten Steuereinheit angesteuert wird, auf der ein dem Bauteil zugeordnetes Dosierprogramm abläuft.

Vorzugsweise ist die erste Steuereinheit mit der zweiten Steuereinheit identisch. Dies hat den Vorteil, dass mit einer einzigen Steuereinheit die Ansteuerung des Industrieroboters zum Bewegen der Auftrageinheit und die Ansteuerung der Dosiereinheit zur Einstellung eines vorgegebenen Lack-Volumenstroms erfolgen kann. Bevorzugt kann ferner der vorgegebene Lack-Volumenstrom von der Position der Auftrageinheit über der Oberfläche abhängen.

Durch die erfindungsgemäß vorgesehene Verwendung eines Industrieroboters, der insbesondere in Form eines 6-Achsen-Industrieroboters ausgebildet sein kann, wird erfindungsgemäß die Erreichbarkeit schwieriger Bereiche der zu lackierenden Oberfläche, wie z.B. Hinterschnitten, gewährleistet. Vorzugsweise sind erfindungsgemäß eine Mehrzahl von Auftrageinheiten, insbesondere wenigstens zwei Auftrageinheiten vorgesehen. Die Anzahl der Auftragseinheiten ist abhängig von der geforderten Flächenleistung und insbesondere von der Geometrie der zu beschichtenden Oberfläche und wird entsprechend gewählt. Die Auftrageinheiten sind hierbei bevorzugt reihenförmig angeordnet, und zwar insbesondere nebeneinander oder hintereinander.

Die Lack-Volumenströme der Auftrageinheiten sind bevorzugt von der wenigstens einen Dosiereinheit einzeln und unabhängig voneinander einstellbar bzw. steuerbar. Über Bewegungsachsen des Roboters können in allen drei Raumrichtungen sämtliche Positionen über der zu lackierenden Oberfläche von der Auftrageinheit bzw. den Auftrageinheiten angefahren werden.

Der vorgegebene Lack-Volumenstrom kann ein zeitlich konstanter Lack-Volumenstrom sein und daher insbesondere nur von der Position der Auftrageinheit über der Oberfläche abhängen. Der vorgegebene Lack-Volumenstrom kann ferner auch von der Geschwindigkeit der Auftrageinheit beim Bewegen derselben über der Oberfläche abhängen.

Das dem Bauteil zugeordnete Roboterprogramm ermöglicht eine eigens auf das Bauteil - das insbesondere ein Fahrzeug-Kunststoffbauteil sein kann - abgestimmte Bewegung der Auftrageinheit bzw. Auftrageinheiten über der Oberfläche des Bauteils. Hierbei ist der gesamte Bewegungsablauf, der zumindest zeitweise die Bewegung entlang einer dreidimensionalen Trajektorie umfasst, insbesondere eine Funktion von Lackkenndaten und/oder eine Funktion von Brush-Werten und/oder eine Funktion von zu erzielenden Lackschichtdicken bzw. Lackschichtdicken-Verteilungen und/oder eine Funktion der Geometrie der zu lackierenden Oberfläche des Bauteils bzw. eine Funktion der Form der zu lackierenden Oberfläche des Bauteils.

Auch der Lack-Volumenstrom kann insbesondere eine Funktion der Lackkenndaten und/oder eine Funktion von Brush-Werten und/oder eine Funktion von zu erzielenden Lackschichtdicken bzw. Lackschichtdicken-Verteilungen und/oder eine Funktion der Geometrie der zu lackierenden Oberfläche des Bauteils bzw. eine Funktion der Form der zu lackierenden Oberfläche des Bauteils sein.

Erfindungsgemäß ist insbesondere vorgesehen während des Lackierens den Lack-Volumenstrom bzw. die Lack-Volumenströme und/oder den Abstand der Auftrageinheit bzw. der Auftrageinheiten zu der Oberfläche und die Geschwindigkeit der Auftrageinheit bzw. der Auftrageinheiten zu regeln. Die erforderlichen Parameter sind vorzugsweise über das Roboterprogramm bzw. das Dosierprogramm und vorzugsweise auch über Brush-Werte hinterlegt.

Bei einer bevorzugten Ausführungsform wird der Abstand der Auftrageinheit zu der Oberfläche mit einer Abstands-Messvorrichtung gemessen, die vorzugsweise eine Infrarot-Abstands-Messvorrichtung sein kann, wobei der gemessene Abstand vorzugsweise als Ist-Größe für eine abstandsgeregelte Bewegung der Auftrageinheit über der Oberfläche verwendet wird.

Bei einer praktischen Ausführungsform des erfindungsgemäßen Verfahrens wird die Auftrageinheit im Wesentlichen mit gleichbleibendem Abstand zu der Oberfläche bewegt. Hierdurch lässt eine sehr gleichmäßige Lackschichtdicken-Verteilung über der Oberfläche herstellen. Bei einer weiteren praktischen Ausführungsform ist die Trajektorie der Geometrie der Oberfläche angepasst bzw. der Form der Oberfläche angepasst. Auch hierdurch lässt eine sehr gleichmäßige Lackschichtdicken-Verteilung über der Oberfläche herstellen.

Besonders bevorzugt ist der verwendete Lack ein durch UV-Licht härtender Klarlack oder ein reaktiver Lack wie z.B. ein Polyurethan- oder Epoxidharzlack oder ein physikalisch trocknender Lack wie z.B. eine Dispersion.

Der Einsatz von durch UV-Licht härtendem Klarlack zur Bildung einer Schutzschicht für die Oberfläche, wie z.B. auch in Form eines UV-härtenden "Clearcoats", ist insbesondere bei 3-dimensionalen Fahrzeug-Kunststoffbauteilen, wie etwa Außenanbauteilen (z. B. Kunststoffstoßfängern) insbesondere durch verbesserte Eigenschaften wie Kratzbeständigkeit, Chemikalienbeständigkeit, etc begründet. Allerdings ist die Lackierung von Fahrzeug-Kunststoffbauteilen mit einem UV-Licht härtenden Klarlack infolge der im Vergleich zu PU-Klarlack um Faktor 2 bis 3 höheren Kosten bislang nicht wirtschaftlich.

Jedoch ist durch Verwendung des erfindungsgemäßen Verfahrens eine nahezu vollständige Vermeidung des Verlusts an Lack bzw. Lackiermaterial möglich, so dass mittels des erfindungsgemäßen Verfahrens trotz der höheren Kosten für UV-Licht härtenden Klarlack eine wirtschaftliche Lackierung mit UV-Licht härtendem Klarlack möglich ist. So lassen sich im Unterschied zu einem bisher erzielbaren Lack-Applikationsgrad von ca. 60 %, der mittels des erfindungsgemäßen Verfahrens nahezu 100 % beträgt, die Kosten für das Lackmaterial um bis zu 40 % reduzieren.

Bevorzugt weist der verwendete Lack einen Festkörpergehalt nach DIN EN ISO 3251 innerhalb eines Bereichs von 20% bis 60% für reaktive Polyurethansysteme und von 60 % bis 90 % für UV-Licht härtende Klarlacke, sowie eine dynamische Viskosität bei 23 °C nach DIN 53019 innerhalb eines Bereichs von 100 bis 500 mPas, vorzugweise 100 bis 400 mPas, besonders bevorzugt 200 bis 350 mPas auf. Ein so erfindungsgemäß ausgebildeter Lack kann störungsfrei durch Düsen der Auftrageinheit strömen, einhergehend mit einem störungsfreien Lackiervorgang.

Insbesondere kann erfindungsgemäß ein Lack verwendet werden, dessen Festkörpergehalt und Viskosität derart gewählt bzw. eingestellt sind, dass ein aus einer Düse der Auftrageinheit ausgetretener und auf die Oberfläche aufgebrachter Lacktropfen seine Form im Wesentlichen beibehält. So lassen sich topographische Effekte, insbesondere in Form von ganzflächigen oder partiellen "Narbeffekten", erzielen.

Bei einer besonders praktischen Ausführungsform des erfindungsgemäßen Verfahrens wird vor dem Aufbringen des Lacks ein Identifizierungscode des Bauteils, der auf einem RFID-Transponder abgespeichert ist, der in Umgebung des Bauteils angeordnet oder an diesem angebracht ist, von einem RFID-Lesegerät ausgelesen, und der Identifizierungscode wird einer dritten Steuereinheit zugeführt, die eingerichtet ist, bei Empfang des Identifizierungscodes, das dem Bauteil zugeordnete Roboterprogramm und das dem Bauteil zugeordnete Dosierprogramm zu starten. Vorzugsweise ist hierbei die dritte Steuereinheit mit der ersten oder der zweiten Steuereinheit identisch.

Diese besonders bevorzugte Ausführungsform basiert auf der Verwendung von bekannten RFID-Systemen. Unter RFID (Abk. für engl. "Radio Frequency Identification") versteht man ein technisches System, das die äußerst praktische Möglichkeit bietet Daten lesen zu können, ohne diese Daten berühren oder direkt sehen zu müssen, denn sie werden über Funkerkennung übermittelt.

Bekannte RFID-Systeme bestehen hauptsächlich aus einem RFID-Transponder (auch RFID-tags genannt) und einem RFID-Lesegerät, wobei der RFID-Transponder auf einem Chip wichtige Daten enthält, die er auf Anregung von außen, nämlich durch das Lesegerät, aussendet. Bekannte RFID-Transponder können Abmessungen in der Größenordung weniger Millimeter aufweisen, und können bequem an beliebigen Gegenständen angebracht werden.

Durch die Verwendung des erfindungsgemäßen RFID-Transponders, auf dem ein Identifizierungscode des zu lackierenden Bauteils abgespeichert ist, können in Verbindung mit dem erfindungsgemäßen RFID-Lesegerät auf praktische Weise ein eigens dem jeweiligen Bauteil zugeordnetes Roboterprogramm und Dosierprogramm durch die dritte Steuereinheit gestartet werden. Dies ist insbesondere bei der Produktion einer Vielzahl von Bauteilen von Vorteil, um eine Lackierung mit einem für das betreffende Bauteil falschen bzw. nicht vorgesehenen Roboterprogramm bzw. Dosierprogramm zu vermeiden.

Bei einer weiteren praktischen Ausführungsform ist die wenigstens eine Auftrageinheit beweglich an dem Industrieroboter gehalten, und mittels wenigstens einer an die Auftrageinheit gekoppelten digital ansteuerbaren Stellvorrichtung wird die Auftrageinheit vor dem Aufbringen des Lacks relativ zu dem Industrieroboter in eine dem Bauteil zugeordnete vorgegebene Position überführt und in dieser ortsfest gehalten. Erfindungsgemäß kann so vor dem Lackieren eine für das jeweilige Roboterprogramm bzw. Dosierprogramm erforderliche Positionierung der Auftrageinheiten bzw. der Auftrageinheit relativ zu dem Bauteil eingestellt werden, die insbesondere der Geometrie des Bauteils bzw. der Geometrie der zu lackierenden Oberfläche des Bauteils angepasst sein kann. Alternativ kann die Anpassung auch über eine einmalig feste Einstellung erfolgen, oder durch Austauschen bzw. Errichten der gesamten Anordnung, die wenigstens eine Auftrageinheit aufweist.

Bevorzugt wird vor dem Aufbringen des Lacks ein Identifizierungscode des Bauteils, der auf einem RFID-Transponder abgespeichert ist, der in Umgebung des Bauteils angeordnet oder an diesem angebracht ist, von einem RFID-Lesegerät ausgelesen, und der Identifizierungscode wird einer Stellvorrichtungs-Steuereinheit zugeführt, die eingerichtet ist, bei Empfang des Identifizierungscodes, die Stellvorrichtung derart anzusteuern, dass die Auftrageinheit in die dem Bauteil zugeordnete vorgegebene Position überführt und in dieser ortsfest gehalten wird. Vorzugsweise ist hierbei die Stellvorrichtungs-Steuereinheit mit der ersten oder zweiten Steuereinheit identisch.

Durch die Verwendung des erfindungsgemäßen RFID-Transponders, auf dem ein Identifizierungscode des zu lackierenden Bauteils abgespeichert ist, kann in Verbindung mit dem erfindungsgemäßen RFID-Lesegerät vor dem Lackieren auf praktische Weise eine eigens dem jeweiligen Bauteil zugeordnete Positionierung der Auftrageinheit bzw. der Auftrageinheiten eingestellt werden ,die für das jeweilige Roboterprogramm bzw. Dosierprogramm erforderlich ist.

Die Erfindung betrifft ferner ein System zum Lackieren einer dreidimensionalen Oberfläche eines Bauteils, insbesondere eines Fahrzeug-Kunststoffbauteils, mit wenigstens einer digital ansteuerbaren Lackiervorrichtung zum Aufbringen von Lack auf die Oberfläche des Bauteils, wobei die Lackiervorrichtung wenigstens eine Auftrageinheit, insbesondere einen Druckkopf, zum Auftragen des Lacks auf die Oberfläche und wenigstens eine Dosiereinheit zu Einstellung des aus der Auftrageinheit austretenden Lack-Volumenstroms aufweist, und wenigstens einem Industrieroboter an dem die Auftrageinheit angebracht ist, wobei der Industrieroboter eingerichtet ist, die Auftrageinheit während des Aufbringens des Lacks zumindest zeitweise entlang einer dreidimensionalen Trajektorie über der zu lackierenden Oberfläche zu bewegen. Die Trajektorie ist hierbei erfindungsgemäß beabstandet von der Oberfläche angeordnet, um einen Kontakt der Auftrageinheit mit der Oberfläche zu vermeiden. Das erfindungsgemäße System ist insbesondere zur Durchführung des erfindungsgemäßen Verfahrens zum Lackieren einer dreidimensionalen Oberfläche eines Bauteils, insbesondere eines Fahrzeug-Kunststoffbauteils vorgesehen.

Bei einer praktischen Ausführungsform weist das System eine erste Steuereinheit auf, wobei der Industrieroboter zum Bewegen der Auftrageinheit von der ersten Steuereinheit über ein auf dieser ablaufbares Roboterprogramm ansteuerbar ist, das ein dem Bauteil zugeordnetes Roboterprogramm ist, und das System weist eine zweite Steuereinheit auf, wobei die Dosiereinheit zur Einstellung eines vorgegebenen Lack-Volumenstroms von der zweiten Steuereinheit über ein auf dieser ablaufbares Dosierprogramm ansteuerbar ist, das ein dem Bauteil zugeordnetes Dosierprogramm ist. Vorzugsweise ist die erste Steuereinheit mit der zweiten Steuereinheit identisch. Ferner hängt der vorgegebene Lack-Volumenstrom bevorzugt von der Position der Auftrageinheit über der Oberfläche ab.

Bei einer weiteren praktischen Ausführungsform weist das System wenigstens ein RFID-Lesegerät und eine dritte Steuereinheit auf, wobei das RFID-Lesegerät dafür vorgesehen ist, vor dem Aufbringen des Lacks einen Identifizierungscode des Bauteils, der auf einem RFID-Transponder abgespeichert ist, der in Umgebung des Bauteils angeordnet oder an diesem angebracht ist, auszulesen und der dritten Steuereinheit zuzuführen, die eingerichtet ist, bei Empfang des Identifizierungscodes, das dem Bauteil zugeordnete Roboterprogramm und das dem Bauteil zugeordnete Dosierprogramm zu starten. Vorzugsweise ist hierbei die dritte Steuereinheit mit der ersten oder der zweiten Steuereinheit identisch.

Bei einer besonders bevorzugten Ausführungsform ist die wenigstens eine Auftrageinheit beweglich an dem Industrieroboter gehalten, und das System weist eine an die Auftrageinheit gekoppelte digital ansteuerbare Stellvorrichtung auf, die eingerichtet ist, die Auftrageinheit in eine vorgegebene Position relativ zu dem Industrieroboter zu überführen und in dieser Position ortsfest relativ zu dem Industrieroboter zu halten.

Bei dieser besonders bevorzugten Ausführungsform weist das System bevorzugt wenigstens ein RFID-Lesegerät und eine Stellvorrichtungs-Steuereinheit auf, wobei das RFID-Lesegerät dafür vorgesehen ist, vor dem Aufbringen des Lacks einen Identifizierungscode des Bauteils, der auf einem RFID-Transponder abgespeichert ist, der in Umgebung des Bauteils angeordnet oder an diesem angebracht ist, auszulesen und der Stellvorrichtungs-Steuereinheit zuzuführen, die eingerichtet ist, bei Empfang des Identifizierungscodes, die Stellvorrichtung derart anzusteuern, dass die Auftrageinheit in eine dem Bauteil zugeordnete vorgegebene Position überführt und in dieser ortsfest gehalten wird. Bevorzugt ist die Stellvorrichtungs-Steuereinheit mit der ersten oder zweiten Steuereinheit identisch.

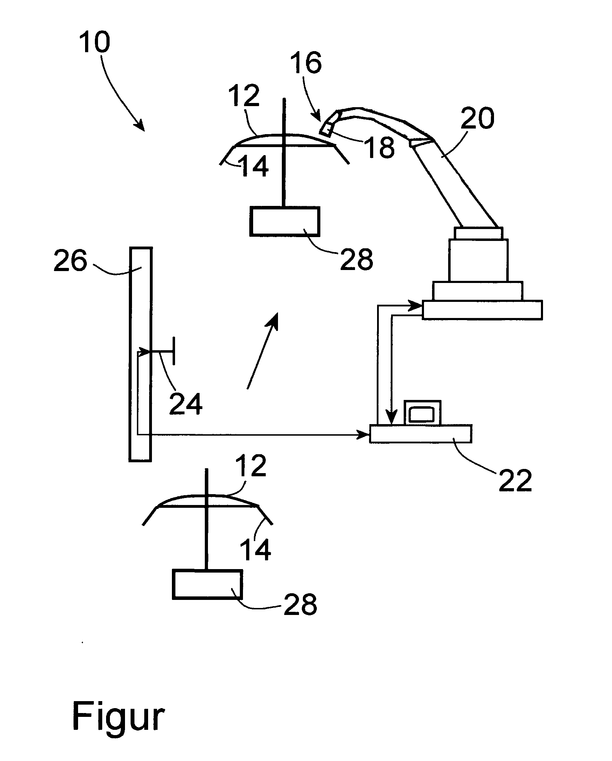

### Kurzbeschreibung der Figur

Nachfolgend wird ein Ausführungsbeispiel der Erfindung anhand der beigefügten Figur näher erläutert, die ein erfindungsgemäßes System 10 zum Lackieren einer dreidimensionalen Oberfläche 12 eines Fahrzeug-Kunststoffbauteils 14 in Form eines Stoßfängers 14 zeigt.

Das System 10 weist eine digital ansteuerbare Lackiervorrichtung 16 zum Aufbringen von Lack auf die Oberfläche 12 des Stoßfängers 14 auf. Die Lackiervorrichtung 16 weist bei diesem Ausführungsbeispiel eine Auftrageinheit in Form eines digital ansteuerbaren Druckkopfs 18 zum Auftragen des Lacks auf die Oberfläche 12 auf, und eine nicht näher dargestellte Dosiereinheit zu Einstellung des aus dem Druckkopf 18 austretenden Lack-Volumenstroms. Das System 10 umfasst ferner einen Industrieroboter 20, an dem der Druckkopf 18 angebracht ist, und eine Steuereinheit 22 in Form eines Computers. Erfindungsgemäß kann das System 12 (wie hier nicht dargestellt) auch eine Mehrzahl von digital ansteuerbaren Lackiervorrichtungen 16 mit einer entsprechenden Mehrzahl von Dosiereinheiten und einer Mehrzahl von Druckköpfen 18, die an dem Industrieroboter 20 z.B. in Reihe hintereinander oder nebeneinander angebracht sind, aufweisen.

Der Industrieroboter 20 ist zum Bewegen des Druckkopfs 18 von der Steuereinheit 22 über ein auf dieser ablaufbares Roboterprogramm ansteuerbar, das ein dem Stoßfänger 14 zugeordnetes Roboterprogramm ist. Die Dosiereinheit ist zur Einstellung eines vorgegebenen Lack-Volumenstroms, der von der Position des Druckkopfs 18 über der Oberfläche abhängt, von der Steuereinheit 22 über ein auf dieser ablaufbares Dosierprogramm ansteuerbar, das ein dem Stoßfänger 14 zugeordnetes Dosierprogramm ist.

Das System weist auch ein RFID-Lesegerät 24 auf, das an einem Halterahmen 26 angebracht ist. Das RFID-Lesegerät 24 ist dafür vorgesehen, vor dem Aufbringen des Lacks auf die Oberfläche 12 einen Identifizierungscode des Stoßfängers 14 auszulesen, der auf einem nicht näher dargestellten RFID-Transponder abgespeichert ist, der an dem Stoßfänger 14 angebracht ist, und den Identifizierungscode der Steuereinheit 22 zuzuführen, die eingerichtet ist, bei Empfang des Identifizierungscodes, das dem Stoßfänger 14 zugeordnete Roboterprogramm und Dosierprogramm zu starten.

Der Stoßfänger 14 befindet sich auf einem Warenträger 28, der mittels einer nicht näher dargestellten Fördereinrichtung bewegbar ist, wobei der Warenträger 28 erfindungsgemäß zunächst an dem RFID-Lesegerät 24 vorbeigeführt wird, um den Identifizierungscode auszulesen. Anschließend erfolgt die Bewegung (schematisch durch einen Pfeil dargestellt) des Warenträgers 28 mit dem auf diesem angeordneten Stoßfänger 14 in eine Lackierposition in Umgebung des Industrieroboters 20, welcher die Lackierung der Oberfläche 12 des Stoßfängers 14 gemäß dem zugeordneten Roboterprogramm und dem zugeordneten Dosierprogramm vornimmt, wobei bei diesem Ausführungsbeispiel der Identifizierungscode der Steuereinheit 22 verzögert zugeführt wird, um Prozesszeit für die dem Lackiervorgang vorgeschaltete Bewegung des Warenträgers 28 zu der Lackierposition bereitzustellen.

Die Reinigung des Druckkopfs 18 bzw. der Druckköpfe 18 erfolgt über ein separat hinterlegtes Spülprogramm, das je nach Erfordernis (z.B. Produktionsunterbrechungen, Produktionsende, Verunreinigung der Düsen des Druckkopfs 18 bzw. der Druckköpfe 18) zwischen den Lackiervorgängen ausgelöst wird. Dabei wird ein Spülmittel den Druckköpfen 18 über lackführende Kanäle zugeführt. Für diesen Spülprozess fährt der Industrieroboter 20 in eine vorgewählte Spülposition, wo der ausgetragene Spülrückstand in Behältern aufgefangen wird und gezielt entsorgt werden kann.

Der auf die Oberfläche aufzutragende Lack kann insbesondere ein durch UV-Licht (als Ultraviolettes Licht) härtender Klarlack sein, der bei einem Teilprozess eines nachfolgend stichwortartig beschriebenen Lackierprozesses zur Lackierung eines Stoßfängers auf eine bereits vorbehandelte Oberfläche des Stoßfängers aufgebracht wird (nachfolgend Teilprozess Nr. 13), wobei der Stoßfänger ein durch ein Spritzgussverfahren hergestellter Stoßfänger ist.

### Lackierprozess in Teilprozessen:

1. Bauteil wird auf Warenträger platziert
2. Warenträger mit Bauteil wird automatisch durch eine Beschichtungsanlage gefördert
3. Prozessschritt Reinigen: Wässrig oder mittels CO₂ oder Reinigen von Hand
4. Beflämmen mit sauerstoffreicher Flamme
5. Grundieren nach Bedarf mit füllenden Lacksystemen (Hydro- oder Lösemittellacke)
6. Abdunsten der Grundierung bei ca. 20 bis 30 °C
7. Trocknung der Grundierung bei ca. 80° Objekttemperatur
8. Kühlen der Bauteile auf unter 30 °C Objekttemperatur
9. Auftrag von farbgebenden Lackschichten, z.B. in Form von Metalleffekt-Basislacken (Hydro- oder Lösemittellacke)
10. Abdunsten der farbgebenden Schicht bei ca. 20 bis 30 °C
11. Trocknung der farbgebenden Schicht bei 20 bis 80° Objekttemperatur
12. Kühlen der Bauteile auf unter 30 °C Objekttemperatur
13. Aufbringen eines durch UV-Licht härtbaren Klarlacks gemäß dem erfindungsgemäßen Verfahren
14. Vortrocknung der Klarlackschicht bei Bedarf
15. Härtung der Klarlackschicht durch UV-Licht
16. Kühlen der Bauteile auf unter 30 °C Objekttemperatur
17. Abnahme der Bauteile vom Warenträger

### Bezugszeichenliste

- 10: System
- 12: Oberfläche
- 14: Stoßfänger
- 16: Lackiervorrichtung
- 18: Druckkopf
- 20: Industrieroboter
- 22: Steuereinheit
- 24: RFID-Lesegerät
- 26: Halterahmen
- 28: Warenträger

## Patentansprüche

1. Verfahren zum Lackieren einer dreidimensionalen Oberfläche (12) eines Bauteils (14), insbesondere eines Fahrzeug-Kunststoffbauteils (14),
wobei auf die Oberfläche (12) mittels wenigstens einer digital ansteuerbaren Lackiervorrichtung (16) ein Lack aufgebracht wird, wobei die Lackiervorrichtung (16) wenigstens eine von der Oberfläche (12) beabstandete Auftrageinheit (18), insbesondere einen Druckkopf (18), zum Auftragen des Lacks auf die Oberfläche (12) und wenigstens eine Dosiereinheit zur Einstellung des aus der Auftrageinheit (18) austretenden Lack-Volumenstroms aufweist,
und wobei die Auftrageinheit (18) während des Lackierens über die Oberfläche (12) bewegt wird, und dabei zumindest zeitweise einer dreidimensionalen Trajektorie folgt.

2. Verfahren nach Anspruch 1, **dadurch gekennzeichnet, dass** zum Bewegen der Auftrageinheit (18) ein Industrieroboter (20) verwendet wird, wobei der Industrieroboter (20) zum Bewegen der Auftrageinheit (18) von einer ersten Steuereinheit (22) angesteuert wird, auf der ein dem Bauteil (14) zugeordnetes Roboterprogramm abläuft, und dass die Dosiereinheit zur Einstellung eines vorgegebenen Lack-Volumenstroms von einer zweiten Steuereinheit angesteuert wird, auf der ein dem Bauteil (14) zugeordnetes Dosierprogramm abläuft.

3. Verfahren nach Anspruch 2, **dadurch gekennzeichnet, dass** der vorgegebene Lack-Volumenstrom von der Position der Auftrageinheit (18) über der Oberfläche (12) abhängt.

4. Verfahren nach Anspruch 2 oder 3, **dadurch gekennzeichnet, dass** die wenigstens eine Auftrageinheit (18) beweglich an dem Industrieroboter (20) gehalten ist, und dass mittels wenigstens einer an die Auftrageinheit (18) gekoppelten digital ansteuerbaren Stellvorrichtung die Auftrageinheit (18) vor dem Aufbringen des Lacks relativ zu dem Industrieroboter (20) in eine dem Bauteil (14) zugeordnete vorgegebene Position überführt und in dieser ortsfest gehalten wird.

5. Verfahren nach Anspruch 2 oder 3, **dadurch gekennzeichnet, dass** vor dem Aufbringen des Lacks ein Identifizierungscode des Bauteils (14), der auf einem RFID-Transponder abgespeichert ist, der in Umgebung des Bauteils (14) angeordnet oder an diesem angebracht ist, von einem RFID-Lesegerät (24) ausgelesen wird, und der Identifizierungscode einer dritten Steuereinheit zugeführt wird, die eingerichtet ist, bei Empfang des Identifizierungscodes, das dem Bauteil (14) zugeordnete Roboterprogramm und das dem Bauteil (14) zugeordnete Dosierprogramm zu starten.

6. Verfahren nach Anspruch 4, **dadurch gekennzeichnet, dass** vor dem Aufbringen des Lacks ein Identifizierungscode des Bauteils (14), der auf einem RFID-Transponder abgespeichert ist, der in Umgebung des Bauteils (14) angeordnet oder an diesem angebracht ist, von einem RFID-Lesegerät (24) ausgelesen wird, und der Identifizierungscode einer Stellvorrichtungs-Steuereinheit zugeführt wird, die eingerichtet ist, bei Empfang des Identifizierungscodes, die Stellvorrichtung derart anzusteuern, dass die Auftrageinheit (18) in die dem Bauteil (14) zugeordnete vorgegebene Position überführt und in dieser ortsfest gehalten wird.

7. Verfahren nach einem der vorangehenden Ansprüche, **dadurch gekennzeichnet**, die Trajektorie der Geometrie der Oberfläche (12) angepasst ist.

8. Verfahren nach einem der vorangehenden Ansprüche, **dadurch gekennzeichnet, dass** der Abstand der Auftrageinheit (18) zu der Oberfläche mit einer Abstands-Messvorrichtung gemessen wird, wobei der gemessene Abstand vorzugsweise als Ist-Größe für eine abstandsgeregelte Bewegung der Auftrageinheit (18) über der Oberfläche (12) verwendet wird.

9. Verfahren nach einem der vorangehenden Ansprüche, **dadurch gekennzeichnet, dass** die Auftrageinheit im Wesentlichen mit gleichbleibendem Abstand zu der Oberfläche bewegt wird.

10. Verfahren nach einem der vorangehenden Ansprüche, **dadurch gekennzeichnet, dass** der verwendete Lack ein durch UV-Licht härtender Klarlack oder ein reaktiver Lack wie z.B. ein Polyurethan- oder Epoxidharzlack oder ein physikalisch trocknender Lack wie z.B. eine Dispersion.

11. Verfahren nach einem der vorangehenden Ansprüche, **dadurch gekennzeichnet, dass** der verwendete Lack einen Festkörpergehalt nach DIN EN ISO 3251 innerhalb eines Bereichs von 20 % bis 60 % für reaktive Polyurethansysteme und von 60 % bis 90 % für UV-Licht härtende Klarlacke, sowie eine dynamische Viskosität bei 23 °C nach DIN 53019 innerhalb eines Bereichs von 100 bis 500 mPas aufweist.

12. System (10) zum Lackieren einer dreidimensionalen Oberfläche (12) eines Bauteils (14), insbesondere eines Fahrzeug-Kunststoffbauteils (14), mit
wenigstens einer digital ansteuerbaren Lackiervorrichtung (16) zum Aufbringen von Lack auf die Oberfläche (12) des Bauteils (14), wobei die Lackiervorrichtung (16) wenigstens eine Auftrageinheit (18), insbesondere einen Druckkopf (18), zum Auftragen des Lacks auf die Oberfläche (12) und wenigstens eine Dosiereinheit zur Einstellung des aus der Auftrageinheit (18) austretenden Lack-Volumenstroms aufweist, und
wenigstens einem Industrieroboter (20) an dem die Auftrageinheit (18) angebracht ist, wobei der Industrieroboter (20) eingerichtet ist, die Auftrageinheit (18) während des Aufbringens des Lacks zumindest zeitweise entlang einer dreidimensionalen Trajektorie über der zu lackierenden Oberfläche (12) zu bewegen.

13. System (10) nach Anspruch 12, **dadurch gekennzeichnet, dass** das System (10) eine erste Steuereinheit (22) aufweist, wobei der Industrieroboter (20) zum Bewegen der Auftrageinheit (18) von der ersten Steuereinheit (22) über ein auf dieser ablaufbares Roboterprogramm ansteuerbar ist, das ein dem Bauteil (14) zugeordnetes Roboterprogramm ist, und dass das System (10) eine zweite Steuereinheit aufweist, wobei die Dosiereinheit zur Einstellung eines vorgegebenen Lack-Volumenstroms von der zweiten Steuereinheit über ein auf dieser ablaufbares Dosierprogramm ansteuerbar ist, das ein dem Bauteil (14) zugeordnetes Dosierprogramm ist.

14. System (10) nach Anspruch 13, **dadurch gekennzeichnet, dass** das System (10) wenigstens ein RFID-Lesegerät (24) und eine dritte Steuereinheit aufweist, wobei das RFID-Lesegerät (24) dafür vorgesehen ist, vor dem Aufbringen des Lacks einen Identifizierungscode des Bauteils (14), der auf einem RFID-Transponder abgespeichert ist, der in Umgebung des Bauteils (14) angeordnet oder an diesem angebracht ist, auszulesen und der dritten Steuereinheit zuzuführen, die eingerichtet ist, bei Empfang des Identifizierungscodes, das dem Bauteil (14) zugeordnete Roboterprogramm und das dem Bauteil (14) zugeordnete Dosierprogramm zu starten.

15. System (10) nach Anspruch 13, **dadurch gekennzeichnet, dass** die wenigstens eine Auftrageinheit (18) beweglich an dem Industrieroboter (20) gehalten ist, und dass das System (10) eine an die Auftrageinheit (18) gekoppelte digital ansteuerbare Stellvorrichtung aufweist, die eingerichtet ist, die Auftrageinheit (18) in eine vorgegebene Position relativ zu dem Industrieroboter (20) zu überführen und in dieser Position ortsfest relativ zu dem Industrieroboter (20) zu halten.
